# EUROPÄISCHE PATENTSCHRIFT

(11) **EP 3 146 234 B1**
(45) Veröffentlichungstag und Bekanntmachung des Hinweises auf die Patenterteilung: **12.06.2019**
(21) Anmeldenummer: 15721557.5
(22) Anmeldetag: 23.04.2015
(51) Int. Cl.: F16F 15/14, F16F 15/32

(54) **FLIEHKRAFTPENDELEINRICHTUNG**
CENTRIFUGAL PENDULUM DEVICE
SYSTÈME DE PENDULE CENTRIFUGE

(30) Priorität: 20.05.2014 DE 102014209498
(43) Veröffentlichungstag der Anmeldung: 29.03.2017
(73) Patentinhaber: Schaeffler Technologies AG & Co. KG, 91074 Herzogenaurach (DE)
(72) Erfinder: JUNKER, Uli, 77652 Offenburg (DE)
(86) Internationale Anmeldenummer: PCT/DE2015/200276
(87) Internationale Veröffentlichungsnummer: WO 2015/176721

(56) Entgegenhaltungen:
- DE-A1-102006 014 952

## Beschreibung

Die Erfindung betrifft eine Fliehkraftpendeleinrichtung zur Anordnung im Antriebsstrang eines Kraftfahrzeugs mit wenigstens einer Pendelmasse, die an einer Trägerscheibe angeordnet ist und entlang einer vorgegebenen Pendelbahn eine Relativbewegung zu der Trägerscheibe ausführen kann, um hierbei einen variablen Abstand zur Rotationsachse der Trägerscheibe einzunehmen.

Eine gattungsgemäße Fliehkraftpendeleinrichtung dient der Reduzierung von Schwingungen und Geräuschen im Antriebsstrang eines Kraftfahrzeugs. Zur Reduktion von Torsionsschwingungen werden auf einem rotierenden Teil des Torsionsschwingungssystems zusätzliche bewegliche Massen als so genannte Pendelmassen angebracht. Diese Massen führen im Feld der Zentrifugalbeschleunigung Schwingungen auf vorgegebenen Bahnen aus, wenn sie durch Drehzahlungleichförmigkeiten angeregt werden. Durch diese Schwingungen wird der Erregerschwingung zu passenden Zeiten Energie entzogen und wieder zugeführt, sodass es zu einer Dämpfung der Erregerschwingung kommt, die Pendelmassen also als Schwingungstilger wirken. Da sowohl die Eigenfrequenz der Fliehkraftpendelschwingung als auch die Erregerfrequenz proportional zur Drehzahl sind, kann eine Tilgerwirkung eines Fliehkraftpendels über den ganzen Frequenzbereich der durch Drehzahlungleichheiten angeregten Schwingungen erzielt werden. Eine solche Fliehkraftpendeleinrichtung umfasst wenigstens eine Pendelmasse, die beispielsweise mittels Rollen oder dergleichen an einer rotierenden Trägerscheibe aufgehängt ist und entlang einer vorgegebenen Pendelbahn eine Relativbewegung zu der Trägerscheibe ausführen kann, um hierbei einen variablen Abstand zur Rotationsachse der Trägerscheibe einzunehmen. Die Pendelmasse umfasst zwei beiderseits der Trägerscheibe angeordnete Pendelteilmassen, die fest miteinander verbunden sind. Der Aufbau und die Funktion einer solchen Fliehkraftpendeleinrichtung ist beispielsweise in der DE 10 2006 028 552 A1 beschrieben. Ein weiteres Beispiel wird in der DE 10 2006 014952 A1 veröffentlicht, beschreibt die Merkmale des Oberbegriffs des Anspruchs 1 und ist das nächstliegender Stand der Technik.

Die Fliehkraftpendeleinrichtung wird im Stand der Technik mittels Wuchtbohrungen ausgewuchtet. Dazu werden Bohrungen in die Trägerscheibe eingebracht, die eine Unwucht beseitigen sollen. Die Wuchtbohrungen werden in die vollständig montierte Fliehkraftpendeleinrichtung eingebracht, nachdem deren Unwucht in einem Probelauf auf einer Auswuchteinrichtung bestimmt wurde. Beim Bohren entstehen Späne, die in die Fliehkraftpendeleinrichtung gelangen können, was die Funktion negativ beeinflussen kann. Eine Aufgabe der Erfindung ist es daher, eine Alternative zum Einbringen von Wuchtbohrungen anzugeben.

Dieses Problem wird durch eine Fliehkraftpendeleinrichtung nach Anspruch 1 gelöst. Bevorzugte Ausgestaltungen, Ausführungsformen oder Weiterbildungen der Erfindung sind in den abhängigen Ansprüchen angegeben.

Das oben genannte Problem wird insbesondere gelöst durch eine Fliehkraftpendeleinrichtung zur Anordnung im Antriebsstrang eines Kraftfahrzeugs, mit wenigstens einer Pendelmasse, die an einer Trägerscheibe angeordnet ist und entlang einer vorgegebenen Pendelbahn eine Relativbewegung zu der Trägerscheibe ausführen kann, um hierbei einen variablen Abstand zur Rotationsachse der Trägerscheibe einzunehmen, wobei die Trägerscheibe mindestens eine Bohrung zur Aufnahme mindestens einer Auswuchtmasse umfasst. Die Auswuchtmasse ist in einer Ausführungsform der Erfindung ein Auswuchtniet, insbesondere ein Vollniet. Alternativ zu Nieten können auch andere Teile wie z. B. Blechkappen, Stifte oder dergleichen in die Bohrungen eingepresst oder anderweitig darin befestigt werden. Die mindestens eine Bohrung kann bereits in das Einzelteil der Trägerscheibe während deren Fertigung eingebracht werden. Die Trägerscheibe wird üblicherweise als Stanz-Biegebauteil gefertigt, so dass zum Einbringen der Bohrungen durch Stanzen kein weiterer Arbeitsschritt notwendig ist. Die Genauigkeit von Bohrungen, die durch Stanzen eingebracht wurden, ist ausreichend für die Aufnahme von Nieten. Es bedarf daher keiner spannenden Bearbeitung der Trägerscheibe zum Einbringen der Bohrungen für die Aufnahme der Auswuchtniete. Da beim Vernieten der Auswuchtniete oder dem Einpressen von Blechkappen, Stiften oder dergleichen keine Späne oder dergleichen entstehen, besteht keine Gefahr, dass Fremdkörper wie Späne in die Fliehkraftpendeleinrichtung gelangen.

Die Trägerscheibe umfasst in einer Ausführungsform der Erfindung eine Vielzahl von Bohrungen zur Aufnahme von Auswuchtnieten. Dadurch kann der Auswuchtvorgang durch Anbringen einer unterschiedlichen Anzahl von Auswuchtmassen in unterschiedlichen Bohrungen durchgeführt werden.

Die Vielzahl von Bohrungen zur Aufnahme von Auswuchtmassen sind in einer Ausführungsform der Erfindung über den Umfang der Trägerscheibe verteilt angeordnet.

Die Vielzahl von Bohrungen zur Aufnahme von Auswuchtmassen sind in sind in einer Ausführungsform der Erfindung auf einem Bohrungskreis über den Umfang der Trägerscheibe verteilt angeordnet. Durch diese Maßnahme ist es möglich, einen oder mehrere Auswuchtniete so anzuordnen, dass diese möglichst direkt gegenüber der Unwucht liegen, so dass mit möglichst geringer Auswuchtmasse ausgewuchtet werden kann.

Die Vielzahl von Bohrungen zur Aufnahme von Auswuchtmassen sind in einer Ausführungsform der Erfindung äquidistant auf einem Bohrungskreis über den Umfang der Trägerscheibe verteilt angeordnet. Dies erleichtert ein maschinelles Auswuchten, da die anzubringen Auswuchtmassen auf einem vorgegebenen Radius zur Rotationsachse angebracht werden müssen, so dass als Parameter nur noch eine Winkelkoordinate als Winkel relativ zu einem Nullpunkt sowie die Masse der Auswuchtmasse(n) verbleibt.

Die Vielzahl von Bohrungen zur Aufnahme von Auswuchtmassen sind in einer Ausführungsform der Erfindung in Bohrungsgruppen angeordnet. Dadurch können die Bohrungen in Bereichen angeordnet werden, in denen durch die Bauweise der Fliehkraftpendeleinrichtung mit dem Anbringen von Auswuchtmassen gerechnet werden muss.

Die Bohrungsgruppen sind in einer Ausführungsform der Erfindung jeweils einer Pendelmasse zugeordnet. Da ein großer Teil der Unwucht einer Fliehkraftpendeleinrichtung meist durch Ungenauigkeit in Lage, Form und Masse der Fliehkraftpendel entsteht, werden die Auswuchtmassen bei einer geraden Anzahl von Fliehkraftpendeln, also bei sich gegenüberliegenden Fliehkraftpendeln, in der Regel im Bereich eines der Fliehkraftpendel anzuordnen sein. Durch die gruppenweise Anordnung der Bohrungen kann die Anzahl der erforderlichen Bohrungen minimiert werden.

Jede Bohrungsgruppe umfasst in einer Ausführungsform der Erfindung eine ungerade Anzahl Bohrungen zur Aufnahme von Auswuchtmassen, insbesondere drei Bohrungen. Die mittlere Bohrung kann dabei auf einer Achse durch die Rotationsachse der Fliehkraftpendeleinrichtung und den Schwerpunkt der jeweiligen Pendelmasse in Ruhelage angeordnet sein, so dass die mittlere Bohrung der zu erwartenden Unwucht der gegenüberliegenden Pendelmasse gegenüberliegt. Diese Maßnahme erleichtert das Auswuchten, da zumindest ein Auswuchtniet mit optimaler Auswuchtwirkung angebracht werden kann.

Zumindest eine Bohrung zur Aufnahme von Auswuchtmassen ist in einer Ausführungsform der Erfindung mit einem Auswuchtniet als Auswuchtmasse versehen. Je nach Größe und Lage der Unwucht können mehrere oder eine Vielzahl von Auswuchtnieten über den Umfang der Fliehkraftpendeleinrichtung verteilt angeordnet werden.

Das Auswuchtniet bzw. die Auswuchtniete ist bzw. sind in einer Ausführungsform der Erfindung ein Vollniet bzw. Vollniete. Ein Vollniet ist vergleichsweise kostengünstig und kann mit einfachen Werkzeugen, beispielsweise einer Presse, oder auch manuell mittels eines Hammers und eines Setzkopfes, vernietet werden.

Ausführungsbeispiele der Erfindung werden nachfolgend anhand der beiliegenden Zeichnungen näher erläutert. Dabei zeigen:
Fig. 1 ein erstes Ausführungsbeispiel einer erfindungsgemäßen Fliehkraftpendeleinrichtung in räumlicher Darstellung;
Fig. 2 die Fliehkraftpendeleinrichtung der Fig. 1 In der Draufsicht;
Fig. 3 den Schnitt Y-Y in Fig. 2;
Fig. 4 ein zweites Ausführungsbeispiel einer erfindungsgemäßen Fliehkraftpendeleinrichtung in räumlicher Darstellung;
Fig. 5 die Fliehkraftpendeleinrichtung der Fig. 4 In der Draufsicht;
Fig. 6 den Schnitt Y-Y in Fig. 5.

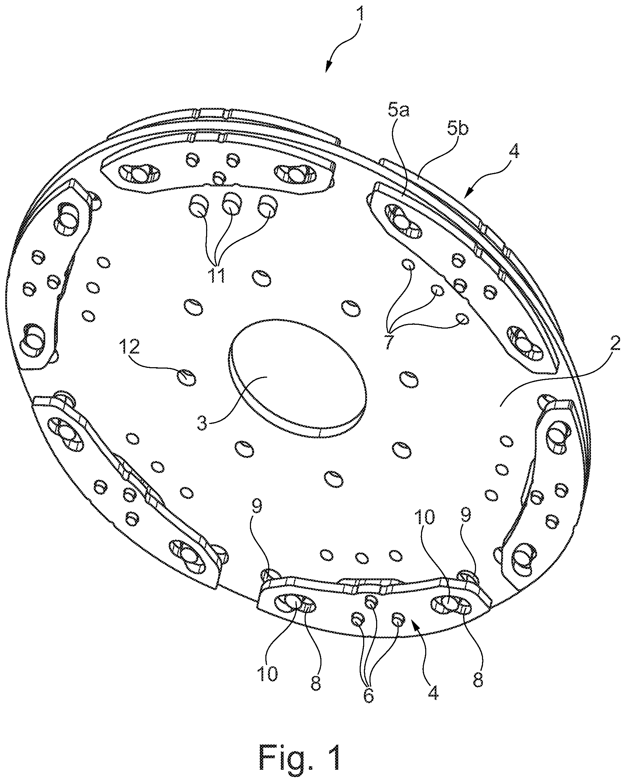

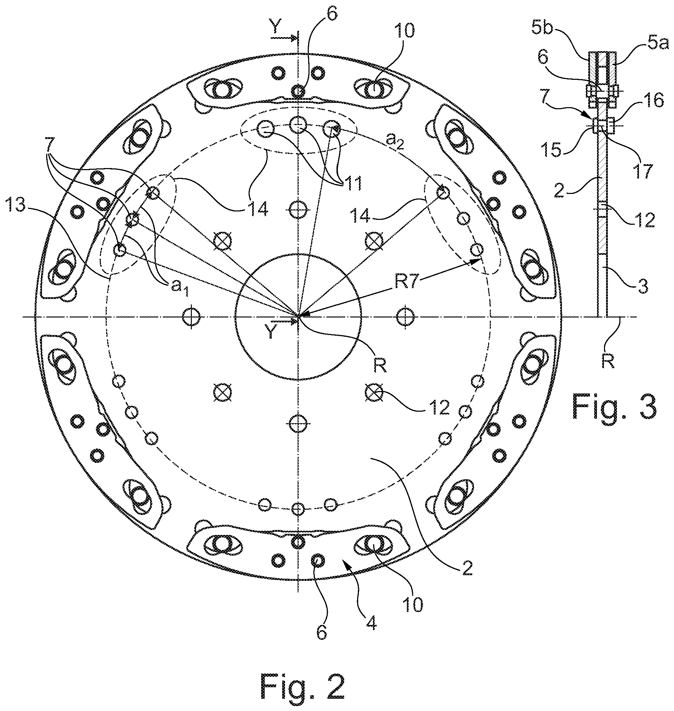

Die Figuren 1 bis 3 zeigen ein erstes Ausführungsbeispiel einer erfindungsgemäßen Fliehkraftpendeleinrichtung 1. Die Fliehkraftpendeleinrichtung 1 ist im Wesentlichen rotationssymmetrisch zu einer Rotationsachse R. Die Umfangsrichtung ist im Folgenden eine Drehung um die Rotationsachse R. Unter der axialen Richtung wird die Richtung parallel zur Rotationsachse R verstanden, entsprechend wird unter der radialen Richtung eine Richtung senkrecht zur Rotationsachse R verstanden. Die Fliehkraftpendeleinrichtung 1 wird in Einbaulage zwischen einer Antriebseinheit, insbesondere einer Brennkraftmaschine mit einer Kurbelwelle als Antriebswelle, und einer Fahrzeugkupplung, die durch eine Ausrückeinrichtung betätigbar und mit einem Getriebe gekoppelt ist, angeordnet.

Die Fliehkraftpendeleinrichtung 1 umfasst eine Trägerscheibe 2 mit einer Öffnung 3. Die Trägerscheibe 2 ist in Einbaulage mittels Befestigungsbohrungen 12 mit einem nicht dargestellten Sekundärflansch oder Primärflansch eines Zweimassenschwungrades, einem Kupplungsgehäuse oder einer Kupplungsgegendruckplatte oder dergleichen verschraubt oder vernietet. Solche Anordnungen eines Fliehkraftpendels im Antriebsstrang eines Kraftfahrzeuges sind beispielsweise in der DE 10 2006 028 556 A1 beschrieben.

Am Außenumfang der Trägerscheibe 2 sind sechs Pendelmassen 4 angeordnet. Die Pendelmassen 4 umfassen jeweils zwei Pendelteilmassen 5a und 5b, die beiderseits der Trägerscheibe 2 angeordnet sind. Die Pendelteilmassen 5a und 5b der Pendelmasse 4 sind jeweils fest miteinander verbunden und verschiebbar bzw. beweglich gegenüber der Trägerscheibe 2 gelagert.

Die zwei Pendelteilmassen 5a und 5b einer jeden Pendelmasse 4 sind mit mehreren Verbindungsbolzen 6, die über den Umfang jeder Pendelmasse 4 verteilt angeordnet sind, miteinander verbunden. Da die Pendelmassen 4 relativ zu der Trägerscheibe 2 sowohl in Umfangsrichtung als auch in radialer Richtung entlang einer Kulissenführung verschiebbar angeordnet sind, sind in der Trägerscheibe 2 jeweils hier nicht gezeigte Ausschnitte eingebracht, in denen die Verbindungsbolzen 6 spielbehaftet gegenüber der Trägerscheibe 2 angeordnet sind. Einige der Verbindungsbolzen 6 sind mit Manschetten, die beispielsweise aus Gummi oder dergleichen gefertigt sind, versehen, um ein Anschlagen der Verbindungsbolzen 6 in den Ausschnitten im An- bzw. Auslauf oder bei geringen Drehzahlen zu dämpfen.

In Langlöchern 8 in den Pendelteilmassen 5a, 5b sowie in Langlöchern 9 in der Trägerscheibe 2 sind Rollen 10 angeordnet. Die Rollen 10 sind rotationssymmetrische Körper mit einer Mittelachse M. Die Rollen 10 bilden in Verbindung mit den Langlöchern 8 in den Pendelteilmassen 5a, 5b und den Langlöchern 9 in der Trägerscheibe 2 eine Kulissenführung für die jeweilige Pendelmasse 4, die eine Bewegung der Pendelmasse 4 entlang einer vorgegebenen Bahn relativ zur Trägerscheibe 2 ermöglichen. Die Laufbahnen der Rollen 10 gegenüber der Trägerscheibe 2 bzw. den Pendelmassen 4 sind so ausgelegt, dass sich der Schwerpunkt der Pendelmasse 4 auf einer Kreisbahn mit einem Radius als Pendelachse um einen Mittelpunkt bewegt, wobei der Radius der Kreisbahn einen Abstand zur Rotationsachse R aufweist. Die Pendelachse ist eine Gerade durch den Schwerpunkt der Pendelmasse und den Mittelpunkt. Bei der Pendelbewegung pendelt die Pendelmasse um einen Winkel um eine Neutralstellung bzw. Mittelstellung. In der Neutralstellung bzw. Mittelstellung ist der Winkel (Auslenkungswinkel) gleich null und der Schwerpunkt der Pendelmasse liegt auf einer Geraden durch den Mittelpunkt und die Rotationsachse R. Die Pendelbewegung erzeugt einen variablen Abstand des Schwerpunkts zur Rotationsachse R. Die Quadratwurzel aus dem Verhältnis Abstand zu Radius ist ein Maß für die Eigenkreisfrequenz des Fliehkraftpendels relativ zur Kreisfrequenz der Rotation um die Rotationsachse R. Die Eigenkreisfrequenz bzw. Tilgerfrequenz des Fliehkraftpendels ist daher proportional zur Drehzahl der Fliehkraftpendeleinrichtung. Bei Abstimmung nahe oder direkt auf die Haupterregeranordnung des Antriebsstrangs erfolgt eine Reduzierung der Schwingungsamplitude über dem gesamten Drehzahlbereich.

Die Trägerscheibe 2 umfasst Bohrungen 7 zur Aufnahme von Auswuchtmassen 11. Die Bohrungen 7 sind auf einem Bohrungskreis 13 mit einem Radius R₇ gelegen. Die Bohrungen 7 sind jeweils zu Gruppen 14 von drei Bohrungen zusammengefasst. Zwischen einer mittleren Bohrung 7-m und zwei äußeren Bohrungen 7-l und 7-n ist jeweils ein Abstand a₁, zwischen zwei benachbarten Bohrungen zweier benachbarter Gruppen besteht jeweils ein Abstand a₂. Die Abstände sind hier jeweils als Kreisbogen angegeben. Der Abstand a₂ ist deutlich größer als der Abstand a₁, der Abstand a₂ ist hier ein Vielfaches des Abstandes a₁. Die Gruppen 14 sind jeweils einer Pendelmasse 4 zugeordnet. Die mittlere Bohrung 7-m liegt auf einer radialen Geraden durch den Schwerpunkt der jeweiligen Pendelmasse 4 in Ruhelage, mithin der nicht ausgelenkten jeweiligen Pendelmasse 4.

Die Bohrungen 7 werden während der Fertigung der Trägerscheibe 2 beispielsweise durch Stanzen eingebracht. Nach der Montage der Fliehkraftpendeleinrichtung 1 wird diese durch Anbringen eines oder mehrerer Auswuchtniete 11 ausgewuchtet. Dazu wird in eine Bohrung 7 ein Auswuchtniet 11 gesteckt und mit einem Schließkopf 15 versehen. Bei dem Auswuchtniet 11 handelt es sich um einen Vollniet aus Metall, beispielsweise aus Stahl, mit einem vorgefertigten tellerförmigen oder halbrunden Setzkopf 16 an einem Ende eines stiftförmigen Nietschafts 17. Zur Befestigung in einer Bohrung 7 wird der Nietschaft 17 in die Bohrung eingeführt bis der Setzkopf 16 an der Trägerscheibe 2 anliegt. Anschließend wird der aus der Bohrung 7 ragende Teil des Nietschaftes 17 durch Pressen oder Hämmern zu dem Setzkopf geformt.

Zum Auswuchten wird die montierte Fliehkraftpendeleinrichtung 1 an eine Auswuchteinrichtung montiert und in Rotation versetzt. Aus den auf die Lagerung ausgeübten umlaufenden Kräften wird eine Unwucht gekennzeichnet durch eine Unwuchtmasse und deren polare Koordinaten, dies ist ein Unwuchtradius und ein Umfangswinkel relativ zu einer beliebig gewählten Nullstellung, bestimmt. Da der Radius hier durch den Bohrungskreis vorgegeben ist, wird die auszugleichende Unwucht allein durch die Masse und den Umfangswinkel bestimmt. Je nach Größe der Unwucht wird ein oder werden mehrere Auswuchtniete 11 in jeweils eine der Bohrungen 7 gesteckt und anschließend vernietet.

Die Masse des Auswuchtniets 11 ändert sich durch den Nietvorgang nicht, sodass ein erneutes Auswuchten nach dem Vernieten nicht notwendig ist.

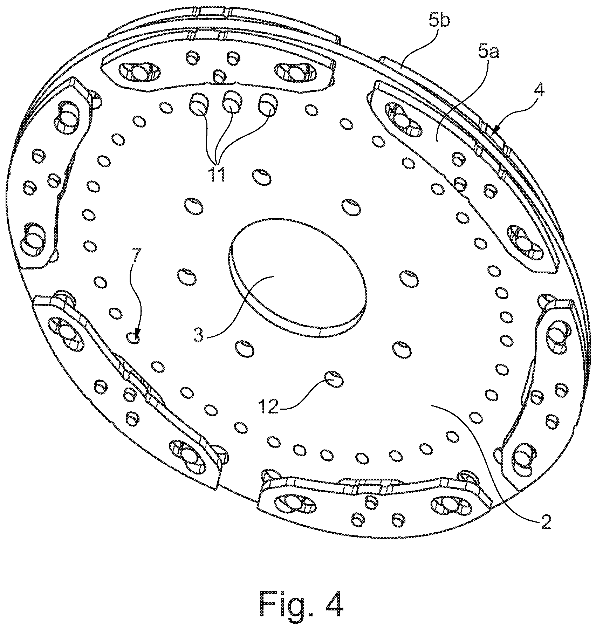

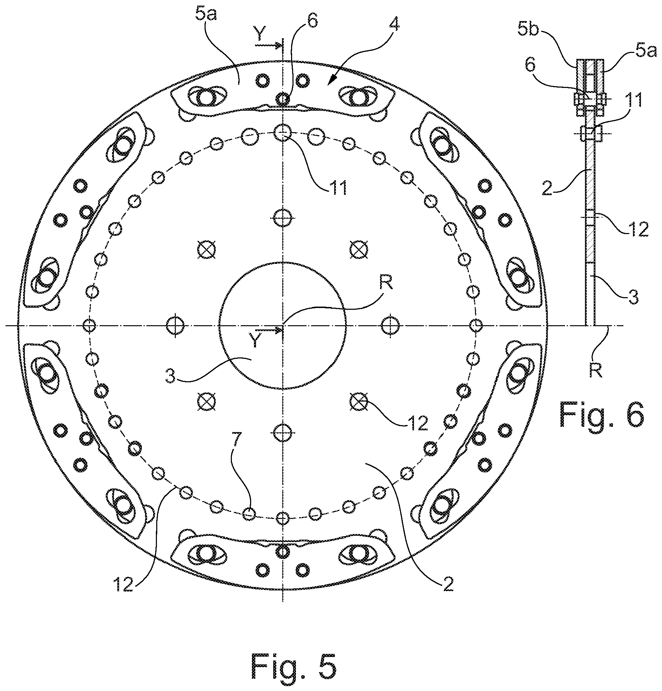

Die Figuren 4 bis 6 zeigen ein alternatives Ausführungsbeispiel einer erfindungsgemäßen Fliehkraftpendeleinrichtung 1. Bei diesem sind die Bohrungen 7 äquidistant über den Umfang verteilt angeordnet, also nicht wie im Ausführungsbeispiel der Figuren 1 bis 3 in Gruppen zusammengefasst.

In den Ausführungsbeispielen der Figuren 1 bis 6 sind drei Niete 11 dargestellt, die in Bohrungen 7 angeordnet sind. Anzahl und Verteilung der angebrachten Niete 11 hängen von Größe und Lage der Unwucht ab, es können prinzipiell beliebig viele Niete 11 in beliebiger Anordnung angebracht werden.

Die Niete 11 können identische Massen haben, was den Auswuchtvorgang erleichtert, oder können unterschiedliche Massen haben, wodurch ein genaueres Auswuchten möglich ist.

### Bezugszeichenliste

- 1: Fliehkraftpendeleinrichtung
- 2: Trägerscheibe
- 3: Öffnung
- 4: Pendelmasse
- 5a, 5b: Pendelteilmassen
- 6: Verbindungsbolzen
- 7: Bohrung zur Aufnahme der Auswuchtniete
- 8: Langloch in der Pendelteilmasse
- 9: Langloch in der Trägerscheibe
- 10: Rolle
- 11: Auswuchtniet
- 12: Befestigungsbohrung
- 13: Bohrungskreis
- 14: Gruppe von Bohrungen für Auswuchtniete
- 15: Schließkopf
- 16: Setzkopf
- 17: Nietschaft

## Patentansprüche

1. Fliehkraftpendeleinrichtung (1) zur Anordnung im Antriebsstrang eines Kraftfahrzeugs mit wenigstens einer Pendelmasse (4), die an einer Trägerscheibe (2) angeordnet ist und entlang einer vorgegebenen Pendelbahn eine Relativbewegung zu der Trägerscheibe (2) ausführen kann, um hierbei einen variablen Abstand zur Rotationsachse der Trägerscheibe (2) einzunehmen, **dadurch gekennzeichnet, dass** die Trägerscheibe (2) mindestens eine Bohrung (7) zur Aufnahme mindestens einer Auswuchtmasse (11) umfasst.

2. Fliehkraftpendeleinrichtung nach Anspruch 1, **dadurch gekennzeichnet, dass** die Trägerscheibe (2) eine Vielzahl von Bohrungen (7) zur Aufnahme von Auswuchtmassen (11) umfasst.

3. Fliehkraftpendeleinrichtung nach Anspruch 2, **dadurch gekennzeichnet, dass** die Vielzahl von Bohrungen (7) zur Aufnahme von Auswuchtmassen (11) über den Umfang der Trägerscheibe (2) verteilt angeordnet sind.

4. Fliehkraftpendeleinrichtung nach Anspruch 3, **dadurch gekennzeichnet, dass** die Vielzahl von Bohrungen (7) zur Aufnahme von Auswuchtmassen (11) auf einem Bohrungskreis (13) über den Umfang der Trägerscheibe (2) verteilt angeordnet sind.

5. Fliehkraftpendeleinrichtung nach Anspruch 4, **dadurch gekennzeichnet, dass** die Vielzahl von Bohrungen (7) zur Aufnahme von Auswuchtmassen (11) äquidistant auf dem Bohrungskreis(13) über den Umfang der Trägerscheibe (2) verteilt angeordnet sind.

6. Fliehkraftpendeleinrichtung nach Anspruch 2, **dadurch gekennzeichnet, dass** die Vielzahl von Bohrungen (7) zur Aufnahme von Auswuchtmassen (11) in Bohrungsgruppen (14) angeordnet sind.

7. Fliehkraftpendeleinrichtung nach Anspruch 6, **dadurch gekennzeichnet, dass** die Bohrungsgruppen (14) jeweils einer Pendelmasse (4) zugeordnet sind.

8. Fliehkraftpendeleinrichtung nach einem der vorhergehenden Ansprüche, **dadurch gekennzeichnet, dass** jede Bohrungsgruppe (14) eine ungerade Anzahl Bohrungen (7) zur Aufnahme von Auswuchtmassen (11) umfasst.

9. Fliehkraftpendeleinrichtung nach einem der vorhergehenden Ansprüche, **dadurch gekennzeichnet, dass** zumindest eine Bohrung (7) zur Aufnahme von Auswuchtmassen mit einem Auswuchtniet (11) versehen ist.

10. Fliehkraftpendeleinrichtung nach Anspruch 9, **dadurch gekennzeichnet, dass** der Auswuchtniet (11) ein Vollniet ist.

## Claims

1. Centrifugal force pendulum device (1) for arranging in the drive train of a motor vehicle having at least one pendulum mass (4) which is arranged on a carrier disc (2) and can perform a relative movement with respect to the carrier disc (2) along a predefined pendulum track, in order to assume a variable spacing from the rotational axis of the carrier disc (2) in the process, **characterized in that** the carrier disc (2) comprises at least one bore (7) for receiving at least one balancing mass (11).

2. Centrifugal force pendulum device according to Claim 1, **characterized in that** the carrier disc (2) comprises a multiplicity of bores (7) for receiving balancing masses (11).

3. Centrifugal force pendulum device according to Claim 2, **characterized in that** the multiplicity of bores (7) for receiving balancing masses (11) are arranged distributed over the circumference of the carrier disc (2) .

4. Centrifugal force pendulum device according to Claim 3, **characterized in that** the multiplicity of bores (7) for receiving balancing masses (11) are arranged distributed over the circumference of the carrier disc (2) on a bore circle (13).

5. Centrifugal force pendulum device according to Claim 4, **characterized in that** the multiplicity of bores (7) for receiving balancing masses (11) are arranged distributed over the circumference of the carrier disc (2) equidistantly on the bore circle (13).

6. Centrifugal force pendulum device according to Claim 2, **characterized in that** the multiplicity of bores (7) for receiving balancing masses (11) are arranged in bore groups (14).

7. Centrifugal force pendulum device according to Claim 6, **characterized in that** the bore groups (14) are assigned to in each case one pendulum mass (4).

8. Centrifugal force pendulum device according to one of the preceding claims, **characterized in that** each bore group (14) comprises an odd number of bores (7) for receiving balancing masses (11).

9. Centrifugal force pendulum device according to one of the preceding claims, **characterized in that** at least one bore (7) for receiving balancing masses is provided with a balancing rivet (11).

10. Centrifugal force pendulum device according to Claim 9, **characterized in that** the balancing rivet (11) is a solid rivet.

## Revendications

1. Dispositif de pendule centrifuge (1) pour agencement dans le groupe motopropulseur d'un véhicule à moteur, doté d'au moins une masse pendulaire (4), laquelle est agencée sur un disque porteur (2) et peut effectuer un mouvement relatif par rapport au disque porteur (2) le long d'un chemin pendulaire prédéfini, afin d'avoir un écart variable à l'axe de rotation du disque porteur (2), **caractérisé en ce que** le disque porteur (2) comprend au moins une perforation (7) pour accueillir au moins une masse d'équilibrage (11).

2. Dispositif de pendule centrifuge selon la revendication 1, **caractérisé en ce que** le disque porteur (2) comprend une pluralité de perforations (7) pour accueillir des masses d'équilibrage (11).

3. Dispositif de pendule centrifuge selon la revendication 2, **caractérisé en ce que** la pluralité de perforations (7) pour accueillir des masses d'équilibrage (11) sont agencées réparties sur le pourtour du disque porteur (2).

4. Dispositif de pendule centrifuge selon la revendication 3, **caractérisé en ce que** la pluralité de perforations (7) pour accueillir des masses d'équilibrage (11) sont agencées réparties sur un cercle de perforations (13) sur le pourtour du disque porteur (2).

5. Dispositif de pendule centrifuge selon la revendication 4, **caractérisé en ce que** la pluralité de perforations (7) pour accueillir des masses d'équilibrage (11) sont agencées réparties équidistantes sur un cercle de perforations (13) sur le pourtour du disque porteur (2).

6. Dispositif de pendule centrifuge selon la revendication 2, **caractérisé en ce que** la pluralité de perforations (7) pour accueillir des masses d'équilibrage (11) sont agencées en groupes de perforations (14).

7. Dispositif de pendule centrifuge selon la revendication 6, **caractérisé en ce que** les groupes de perforations (14) sont respectivement ordonnés à une masse pendulaire (4).

8. Dispositif de pendule centrifuge selon l'une des revendications précédentes, **caractérisé en ce que** chaque groupe de perforations (14) comprend un nombre impair de perforations (7) pour accueillir des masses d'équilibrage (11).

9. Dispositif de pendule centrifuge selon l'une des revendications précédentes, **caractérisé en ce qu'**au moins une perforation (7) pour accueillir des masses d'équilibrage est prévue avec un rivet d'équilibrage (11) .

10. Dispositif de pendule centrifuge selon la revendication 9, **caractérisé en ce que** le rivet d'équilibrage (11) est un rivet plein.
